(19) Europäisches Patentamt
European Patent Office
Office européen des brevets

(11) Publication number: **0 238 033 A2**

# (12) EUROPEAN PATENT APPLICATION

(21) Application number: 87103822.0

(22) Date of filing: 17.03.87

(51) Int. Cl.[4]: C08L 83/07 ,
//(C08L83/07,83:05)

(30) Priority: 17.03.86 JP 58943/86

(43) Date of publication of application:
23.09.87 Bulletin 87/39

(84) Designated Contracting States:
DE FR GB

(71) Applicant: Shin-Etsu Chemical Co., Ltd.
6-1, Ohtemachi 2-chome
Chiyoda-ku Tokyo 100(JP)

(72) Inventor: Aoki, Hisashi
3-19-1, Isobe
Annaka-shi Gunma-ken(JP)
Inventor: Hara, Yasuaki
3-5-5, Haraichi
Annaka-shi Gunma-ken(JP)
Inventor: Kondow, Kiyohiro
120-4, Yanase
Annaka-shi Gunma-ken(JP)

(74) Representative: Jaeger, Klaus, Dipl.-Chem. Dr.
et al
JAEGER & PARTNER Patentanwälte
Pippinplatz 4a
D-8035 Gauting(DE)

## (54) A photocurable organopolysiloxane composition.

(57) The photocurable organopolysiloxane composition comprises (A) a diorganopolysiloxane of which each of the terminal silicon atoms has 2 or 3 vinyl groups bonded thereto, (B) an organohydrogenpolysiloxane as a crosslinking agent, (C) a platinum compound as a catalyst for promoting the addition reaction between the vinyl groups in (A) and the silicon-bonded hydrogen atoms in (B), and (D) a photosensitzer. By virtue of the synergistic effect of the components, the composition is advantageous in the high sensitvity to photo-induced curing and stability.

EP 0 238 033 A2

# A PHOTOCURABLE ORGANOPOLYSILOXANE COMPOSITION

## BACKGROUND OF THE INVENTION

Present invention relates to a photocurable organopolysiloxane composition or, more particularly, to an organopolysiloxane composition curable by the irradiation with light in a relatively small dose to give a cured film having excellent surface releasability on the surface of various substrate materials and useful as a surface treating agent for the preparation of release papers and tapes, for imparting releasability to the back surface of adhesive tapes, for surface lustering and so on.

Various types of photocurable organopolysiloxane compositions are known in the prior art. For example, Japanese Patent Publication 53-48198 teaches a composition comprising a vinylcontaining organopolysiloxane, organohydrogenpolysiloxane, i.e. organopolysiloxane having hydrogen atoms directly bonded to the silicon atoms, and photosensitizer. Further, Japanese Patent Kokai 59-168061 teaches a composition comprising an organopolysiloxane having aliphatically unsaturated groups, organohydrogenpolysiloxane and platinum complex. These prior art compositions, however, are practically disadvantageous due to the relatively low velocity of curing by irradiation with light and also due to the insufficient surface releasability of the cured compositions. These photocurable organopolysiloxane compositions, which utilize the hydrosilation reaction between the silicon-bonded vinyl groups and silicon-bonded hydrogen atoms to effect the addition reaction for curing, can be cured either by heating or by irradiation with ultraviolet light or electron beams as is taught in Japanese Patent Kokai 60-1077029. The curing method by heating, however, cannot be applied to a substrate material having relatively low heat resistance. The method of ultraviolet-or electron beam-curing is disadvantageous in respect of the low surface luster of the cured composition.

Alternatively, Japanese Patent Publication 53-34318 discloses a photocurable organopolysiloxane composition comprising a mercaptoalkyl-containing organopolysiloxane, vinyl-containing organopolysiloxane and photosensitizer. Problems in the photocurable organopolysiloxane compositions of this type include the emission of very offensive odor in the course of the coating works and irradiation with light due to the mercapto groups and the migration of the silicone left uncured from the surface of the composition after irradiation with light to the surface of a contacting body because the phenomenon of free radical trapping by the atmospheric oxygen inhibits curing of the composition in the surface layer

## SUMMARY OF THE INVENTION

It is therefore an object of the present invention to provide a novel organopolysiloxane composition free from the above described problems and disadvantages in the conventional photocurable organopolysiloxane compositions.

Thus, the photocurable organopolysiloxane composition of the present invention comprises:

(A) 100 parts by weight of a diorganopolysiloxane having a substantially linear molecular structure represented by the general formula

$(CH_2=CH)_aR^1_{3-a}Si\text{-}O\text{-}(\text{-}SiR_2\text{-}O\text{-})_n\text{-}SiR^1_{3-a}(CH=CH_2)_a$, ...... (I)

in which each R is a monovalent hydrocarbon group having 1 to 12 carbon atoms, each $R^1$ is a monovalent hydrocarbon group having 1 to 6 carbon atoms and free from aliphatic unsaturation, the subscript a is 2 or 3 and n is a positive integer in the range from 20 to 2000;

(B) from 0.1 to 50 parts by weight of an organohydrogenpolysiloxane having, in a molecule, at least two hydrogen atoms directly bonded to the silicon atoms, the amount being sufficient to provide from 0.1 to 10 moles of the hydrogen atoms directly bonded to the silicon atoms per mole of the vinyl groups in the component (a);

(C) from 1 to 1000 ppm by weight as platinum of a platinum compound based on the total amount of the components (A) and (B); and

(D) from 0.1 to 10 parts by weight of a photosensitizer.

DETAILED DESCRIPTION OF THE PREFERRED EMBODIMENTS

As is understood from the above given summary of the invention, the inventive photocurable organopolysiloxane composition comprises, as the essential ingredients, the components (A), (B), (C) and (D). The main ingredient is a diorganopolysiloxane, of which each terminal silicon atom has two or three vinyl groups bonded thereto, as the component (A) and it is combined with the organohydrogenpolysiloxane as the component (B) to serve as a crosslinking agent, a platinum compound as the component (C) to serve as a catalyst to promote the addition reaction between the silicon-bonded vinyl groups in the component (A) and the silicon-bonded hydrogen atoms in the component (B) and a photosensitizer as the component (D) to promote the photo-induced reaction. By virtue of the synergistic effect of the components (C) and (D), the crosslinking reaction between the components (A) and (B) can rapidly proceed by the irradiation with light in a relatively small dose. For example, the composition can be fully cured to give a completely cured surface film free from the problem of silicone migration within 1 second under ultraviolet irradiation of an intensity of 160 W/cm and the thus obtained cured film of the composition has excellent and stable surface releasability without being decreased even by prolonged aging.

The component (A) of the inventive photocurable organopolysiloxane composition is a diorganopolysiloxane represented by the above given general formula (I) in which each $R^1$ is a monovalent hydrocarbon group having 1 to 6 carbon atoms and free from aliphatic unsaturation exemplified by alkyl groups, e.g. methyl, ethyl, propyl and butyl groups, aryl groups, e.g. phenyl group, and alkaryl groups, e.g. tolyl and xylyl groups, of which methyl group is preferred. Each of the groups denoted by R is, independently from the others, a monovalent hydrocarbon group having 1 to 12 carbon atoms exemplified by alkenyl groups, e.g. vinyl and allyl groups, as well as the alkyl, aryl and alkaryl groups of which particular examples are named above for the group denoted by $R^1$. The groups denoted by R should preferably be selected from methyl, phenyl and vinyl groups. Suitable examples of the group denoted by R also include those substituted groups obtained by the replacement of a part or all of the hydrogen atoms in the above named hydrocarbon groups with substituent atoms and/or groups such as halogen atoms, cyano groups and the like. The subscript a is 2 or 3 each independently from the other so that each of the terminal silicon atoms should have two or three vinyl groups bonded thereto. In other words, the molecular chain of the diorganopolysiloxane should be terminated with divinyl methyl silyl groups or trivinyl silyl groups. Thus, preferable as the component (A) are divinyl methyl silyl-or trivinyl silyl-terminated dimethylpolysiloxanes, copolymers of dimethylsiloxane and methyl vinyl siloxane units, copolymers of dimethylsiloxane and diphenylsiloxane units and the like. The subscript n is a positive integer in the range from 20 to 2000 so that the diorganopolysiloxane has 22 to 2002 silicon atoms in a molecule.

The component (B) to serve as the crosslinking agent of the above described component (A) is an organohydrogenpolysiloxane having, in a molecule, at least two hydrogen atoms directly bonded to the silicon atoms. The molecular structure of the organohydrogenpolysiloxane is not particularly limitative and can be straightly linear, branched chain-like, cyclic or network-like. Examples of the suitable organohydrogenpolysiloxane as the component (B) include: copolymers of dimethylsiloxane units and methyl hydrogen siloxane units end-blocked with trimethyl silyl groups; copolymers of diphenylsiloxane units and methyl hydrogen siloxane units end-blocked with trimethyl silyl groups; cyclic oligomers of methyl hydrogen siloxane units; and the like.

The amount of the component (B) in the inventive photocurable organopolysiloxane composition should be in the range from 0.1 to 50 parts by weight per 100 parts by weight of the component (A) but the amount should be sufficient to provide from 0.1 to 10 moles or, preferably, from 1 to 3 moles of the silicon-bonded hydrogen atoms per mole of the silicon-bonded vinyl groups in the component (A). When the amount of the component (B) is too small, the curability of the composition would be greatly decreased. When the amount of the component (B) is too large, on the other hand, the surface releasability of the cured composition is affected and the peeling resistance of an adhesive material from the surface of the cured composition is unduly increased, in particular, in the lapse of time.

The component (C) in the inventive composition is a platinum compound to serve as a catalyst to promote the addition reaction of hydrosilation between the silicon-bonded vinyl groups in the component (A) and the silicon-bonded hydrogen atoms in the component (B). Various known platinum compounds can be used for the purpose of which preferable are chloroplatinic acid modified or unmodified with an alcoholic compound and complex compounds of chloroplatinic acid with an olefin or a vinyl siloxane. The amount of the component (C) in the inventive composition is not particularly limitative depending on the desired catalytic effect to promote the reaction although the amount should usually be in the range from 1 to 1000 ppm by weight as platinum based on the total amount of the components (A) and (B).

The component (D) in the inventive composition is a photosensitizer to impart the inventive composition with photocurability. Various compounds known to be active as a photosensitizer can be used for the purpose including acetophenone compounds, benzophenone compounds, benzoin compounds, benzyl compounds and the like. Useful compounds as the photosensitizer include acetophenone, propiophenone, benzophenone, xanthone, fluorene, benzaldehyde, anthraquinone, triphenyl amine, carbazole, 3-methyl acetophenone, 4-methyl acetophenone, 3-pentyl acetophenone, 4-methoxy acetophenone, 3-bromo acetophenone, 4-allyl acetophenone, 1,4-diacetyl benzene, 3-methoxy benzophenone, 4-methyl benzophenone, 4-chloro benzophenone, 4,4'-dimethoxy benzophenone, 4-chloro-4'-benzyl benzophenone, 3-chloro xanthone, 3,9-dichloro xanthone, 3-chloro-8-nonyl xanthone, benzoin, benzoin methyl ether, benzoin butyl ether, bis(4-dimethylamino phenyl) ketone, benzyl methoxy ketal, 2-chloro thioxanthone and the like. Particularly preferable are benzyl, 4-methoxy benzophenone and 2-hydroxy-2-methyl-1-phenyl propan-1-on.

The amount of the component (D) in the inventive composition should be in the range from 0.1 to 10 parts by weight or, preferably, from 0.1 to 2 parts by weight per 100 parts by weight of the component (A). When the amount thereof is too large, the composition may sometimes be colored in yellow after curing.

The photocurable organopolysiloxane composition of the invention can be obtained by uniformly mixing the above described components (A) to (D) in a suitable blending machine. When the components have been mixed together, however, the crosslinking reaction between the components (A) and (B) may proceed prematurely even in dark in the presence of the platinum catalyst. Accordingly, it is sometimes advantageous that such a premature dark reaction is suppressed by admixing the composition with a reaction moderator which may be a known acetylenic compound such as 3,5-dimethyl-1-hexyn-3-ol, 3-methyl-1-butyn-3-ol, 3-methyl-3-penten-1-yne, 3-methyl-1-pentyn-3-ol, 5,5-dimethyl-3-hexen-1-yne and the like. The amount of such a reaction moderator in the inventive composition should be in the range from 0.1 to 10 parts by weight per 100 parts by weight of the component (A).

It is further optional that the inventive composition is admixed with other types of vinyl-containing organopolysiloxane outside the definition of the component (A) or an organopolysiloxane having no vinyl groups. In particular, the curing velocity of the composition can be increased by the addition of a copolymeric diorganopolysiloxane composed of dimethyl siloxane units and methyl vinyl siloxane units and having a degree of polymerization of 500 or larger.

When improvement in the mechanical properties of the cured composition is desired, the inventive composition may be admixed with various kinds of inorganic fillers such as fumed silica, calcined silica, precipitated silica, fumed titanium dioxide, calcium carbonate, diatomaceous earth, calcium silicate and the like without or with a hydrophobic surface treatment beforehand using an organochlorosilane, polyorganosiloxane, hexamethyl disilazane and the like although the amount of the filler should be limited in order not to unduly influence the photocurability of the composition. The amount of the filler should not exceed 300 parts by weight per 100 parts by weight of the component (A) since the inventive composition admixed with an excessively large amount of a filler gives a cured product having an unduly high elastic modulus.

Other additives optionally added to the inventive composition according to need to improve or modify a particular property include coloring agents, heat-and cold-resistance improvers, thixotropy modifiers, dehydrating agents, flame retardants, oil-resistance improvers, adhesion aid, rust inhibitors and the like each in a limited amount.

The inventive photocurable organopolysiloxane composition prepared in the above described manner is highly photosensitive and can be fully cured into a cured film by the irradiation with ultraviolet light for 1.0 second or shorter when the intensity of the ultraviolet light is, for example, 160 W/cm or higher. Various types of lamps can be used as the source of ultraviolet light including hydrogen-discharge lamps, mercury-arc lamps, mercury discharge lamps, fluorescent lamps, enclosed carbon-arc lamps, xenon-discharge lamps, open arc lamps with injected carbon or metal electrodes, cadmium-arc lamps, discharge-spark lamps and so on.

If desired, the inventive composition may be diluted with an organic solvent in order to have a decreased viscosity or consistency in consideration of the working efficiency irrespective of the rheological nature of the polymeric constituents therein which may be resinous or rubbery depending on the type of the organopolysiloxane as the principal ingredient. At any rate, the inventive photocurable organopolysiloxane has a high curing velocity to give a cured composition having excellent surface releasability so that the inventive composition is useful as a surface-release agent for release paper, potting agent of electric instruments, coating agent of glass fiber-made sleeves, impregnating agent for electric insulation, water repellent agent, additive in coating compositions and so on.

In the next place, the photocurable organopolysiloxane composition of the invention is described in more detail by way of examples, in which the term of "parts" always refers to "parts by weight" and the values of viscosity are all those obtained by the measurement at 25°C. Following are the description of the procedures for the determination of the peeling resistance and retention of adhesiveness recited in the examples for the evaluation of the compositions.

Peeling resistance

The surface of a substrate, on which a cured film of the organopolysiloxane composition had been formed, was coated with a standard pressure-sensitive adhesive (Oribine BPS-5127, a product by Toyo Ink Manufacturing Co.) and, after a heat treatment at 100°C for 3 minutes, a sheet of covering paper was applied and bonded thereto. After standing as such for 3 hours at 25 °C, the covering paper was peeled off the substrate surface at an angle of 180° on a tensile testing machine to record the force required for peeling in g per 5 cm width. This peeling test was performed either immediately after bonding or after aging the laminate of the substrate and the covering paper bonded together at 70 °C for 20 hours under a load of 20 g/cm². In some of the examples, the peeling resistance test was performed using the substrate with the photocured coating layer kept standing for 24 hours at 70 °C.

Retention of adhesiveness

A standard pressure-sensitive adhesive tape (Nitto Polyester Tape 31B, a product by Nitto Denko Co.) was applied and bonded to the surface of a substrate on which a cured film of the organopolysiloxane composition had been formed beforehand and kept standing for 20 hours at 70 °C under a load of 20 g/cm². Thereafter, the adhesive tape was peeled off the substrate surface and again applied and bonded to the well-polished surface of a stainless steel plate followed by peeling on a tensile testing machine to record the force required for peeling. This value was compared with and given in % of the value obtained by conducting the same bonding and peeling test on the stainless steel plate using a fresh standard adhesive tape.

Example 1 and Comparative Examples 1 and 2.

A photocurable organopolysiloxane composition, which is referred to as the composition I hereinbelow, was prepared in Example 1 by uniformly mixing together 100 parts of a dimethylpolysiloxane having a viscosity of 1500 centipoise and terminated at each molecular chain end with a trivinyl silyl group, 6 parts of a methyl hydrogen polysiloxane having a viscosity of 20 centipoise terminated at each molecular chain end with a trimeth-yl silyl group and containing 1.556 moles/100 g of the hydrogen atoms directly bonded to the silicon atoms, 0.3 part of 3,5-dimethyl-1-hexyn-3-ol, a complex of chloroplatinic acid and a vinyl siloxane in an amount of 200 ppm by weight as platinum based on the total amount of the dimethylpolysiloxane and methyl hydrogen polysiloxane and 0.3 part of 4-methoxy benzophenone.

For comparison, two more compositions, which are referred to as the compositions II and III hereinbelow, were prepared in Comparative Examples 1 and 2, respectively, each in the same formulation as in the composition I excepting replacement of the dimethylpolysiloxane in the composition I with the same amount of another dimethylpolysiloxane having a viscosity of 1500 centipoise and terminated at each molecular chain end with a dimethyl vinyl silyl group (Comparative Example 1) or with the same amount of a methyl vinyl polysiloxane having a viscosity of 1500 centipoise and terminated with a dimethyl vinyl silyl group at each end of the molecular chain, which was composed of 98% by moles of dimethylsiloxane units and 2% by moles of vinyl methyl siloxane units (Comparative Example 2).

A polyethylene-laminated paper was coated with one of the compositions I, II and III in a coating amount of 0.7 g/m² and irradiated with ultraviolet light using two high-pressure mercury lamps of 2 kW output with a linear output of 80 W/cm held 8 cm above the coated paper. The length of time of the ultraviolet irradiation was varied with an object to determine the curability of the composition expressed by the minimum length of time required for complete curing. The thus obtained silicone-coated paper after curing of the organopolysiloxane composition was subjected to the test of the peeling resistance either

immediately after bonding of the covering paper to the substrate or after aging. The results are shown in the table given below which also shows the curability of the respective compositions given in seconds taken for complete curing.

Example 2 and Comparative Example 3.

A photocurable organopolysiloxane composition, which is referred to as the composition IV hereinbelow, was prepared in Example 2 in the same formulation as in the composition I described above except that the amount of the trivinyl silyl-terminated dimethylpolysiloxane was decreased to 95 parts supplemented by the admixture of 5 parts of a methyl vinyl polysiloxane having an average degree of polymerization of about 800 and terminated with a dimethyl vinyl silyl group at each end of the molecular chain composed of 99.5% by moles of dimethyl siloxane units and 0.5% by moles of vinyl methyl siloxane units and replacement of the 4-methoxy benzophenone with the same amount of 2-hydroxy-2-methyl-1-phenyl propan-1-one.

For comparison, another organopolysiloxane composition, which is referred to as the composition V hereinbelow, was prepared in Comparative Example 3 in the same formulation as above excepting replacement of the trivinyl silyl-terminated dimethylpolysiloxane with the same amount of a dimethylpolysiloxane having a viscosity of 1500 centipoise and terminated at each molecular chain end with a dimethyl vinyl silyl group.

The compositions IV and V were subjected to the tests of the curability, peeling resistance and retention of adhesiveness to give the results shown in the table. The test of peeling resistance was performed in three ways. Firstly, the substrate provided with the coating layer of the organopolysiloxane composition was coated with the adhesive immediately after photocuring of the composition followed by bonding and peeling of a covering paper. Secondly, the same test was undertaken after the substrate was kept for 24 hours at 70 °C before coating with the adhesive. Thirdly, the substrate provided with the coating layer was coated with the adhesive and bonded with the covering paper immediately after curing of the composition and peeling of the covering paper was performed after 20 hours of aging at 70 °C as bonded.

Example 3 and Comparative Examples 4 and 5.

A photocurable organopolysiloxane composition in the form of a solution was prepared by dissolving 20 parts of a copolymeric methyl vinyl polysiloxane gum having a viscosity of 1,000,000 centipoise and terminated with a divinyl methyl silyl group at each end of the molecular chain, of which the content of the vinyl groups was 1.0% by moles based on the overall organic groups bonded to the silicon atoms, 10 parts of a copolymeric methyl vinyl polysiloxane having a viscosity of 30,000 centipoise and terminated with a trimethyl silyl group at each end of the molecular chain, of which the content of the vinyl groups was 1.5% by moles based on the overall organic groups bonded to the silicon atoms, 1.0 part of a methyl hydrogen polysiloxane having a viscosity of 25 centipoise composed of dimethyl siloxane units and methyl hydrogen siloxane units and terminated at each molecular chain end with a trimethyl silyl group, of which the content of the siliconbonded hydrogen atoms was 0.7 mole per 100 g, 0.2 part of 3-methyl-3-penten-1-yne and 0.2 part of benzyl in 200 parts of toluene followed by the addition of a complex of chloroplatinic acid and a vinyl siloxane in an amount of 150 ppm by weight as platinum based on the overall amount of the polysiloxane ingredients.

For comparison, another organopolysiloxane composition, which is referred to as the composition VII hereinbelow, was prepared in Comparative Example 4 in the same formulation as in the composition VI except that 20 parts of the divinyl methyl silyl-terminated methyl vinyl polysiloxane gum were replaced with 30 parts of a dimethyl vinyl silyl-terminated methyl vinyl polysiloxane gum having about the same viscosity and about the same content of vinyl groups and the trivinyl silyl-terminated methyl vinyl polysiloxane was replaced with the same amount of a dimethylpolysiloxane having a viscosity of 30,000 centipoise and terminated at each molecular chain end with a dimethyl vinyl silyl group.

For further comparison, a still more organopolysiloxane composition, which is referred to as the composition VIII hereinbelow, was prepared in Comparative Example 5 in the same formulation as in the composition VI except that 20 parts of the divinyl methyl silyl-terminated methyl vinyl polysiloxane gum were replaced with 30 parts of a copolymeric methyl vinyl polysiloxane gum having a viscosity of 1,000,000 centipoise and terminated at each molecular chain end with a dimethyl vinyl silyl group, of which the content of the vinyl groups was 10% by moles based on the overall organic groups bonded to the silicon

atoms and that the trivinyl silyl-terminated methyl vinyl polysiloxane was replaced with the same amount of a copolymeric methyl vinyl polysiloxane having a viscosity of 30,000 centipoise and terminated with a dimethyl vinyl silyl group at each end of the molecular chain which was composed of 98.5% by moles of dimethyl siloxane units and 1.5% by moles of methyl vinyl siloxane units.

A sheet of glassine paper was coated with one of the compositions VI to VIII in a coating amount of 0.7 g/$m^2$ as dry followed by evaporation of the solvent by blowing with air at room temperature. The thus silicone-coated glassine paper was irradiated with ultraviolet light to cure the organopolysiloxane composition in the same manner as in Example 1 and subjected to the test of peeling resistance either before or after aging to give the results shown in the table. The adhesion of the coating layer to the glassine paper was quite firm with the composition VI but somewhat poor with the composition VII and unacceptably poor with the composition VIII.

Example 4.

A photocurable organopolysiloxane composition, which is referred to as the composition IX hereinbelow, was prepared by uniformly mixing together 100 parts of a copolymeric methyl vinyl polysiloxane having a viscosity of 1000 centipoise and terminated with a divinyl methyl silyl group at each end of the molecular chain, of which the content of the vinyl groups was 1.0% by moles based on the overall organic groups bonded to the silicon atoms, 8 parts of the same methyl hydrogen polysiloxane as used in the composition I, 0.3 part of 3,5-dimethyl-3-hexyn-3-ol, a complex of chloroplatinic acid and a vinyl siloxane in an amount of 200 ppm by weight as platinum based on the total amount of the above mentioned two polysiloxane ingredients and 0.3 part of a commercially available photosensitizer (Irgacure 500, a product by Ciba Geigy Co.).

This composition IX was used for coating of a polyethylene-laminated paper followed by curing under ultraviolet irradiation in the same manner as in Example 1. The peeling resistance of the thus prepard specimen was 42 g/5 cm when the test was undertaken immediately after photocuring of the coating layer while the values were 38 g/5 cm and 49 g/5 cm when the test was performed of the substrate with the photocured silicone coating after 24 hours aging at 70 °C and when peeling was performed after 20 hours of aging of the substrate with the covering paper thereon at 70 °C under a load of 20 g/$cm^2$, respectively, showing stability of the coating in the lapse of time.

Table

| Composition No. | | I | II | III | IV | V | VI | VII | VIII |
|---|---|---|---|---|---|---|---|---|---|
| Curability, seconds | | 0.3 | 2.0 | 1.3 | 0.2 | 2.0 | 0.1 | 0.6 | 0.6 |
| Peeling resistance, g/5 cm | Before aging (immediately after curing) | 107 | 167 | 182 | 72 | 158 | 45 | 79 | 62 |
| | Before aging (24 hours at 70°C after curing) | — | — | — | 65 | 78 | — | — | — |
| | After aging | 100 | 446 | 350 | 70 | 405 | 51 | 159 | 114 |
| Retention of adhesiveness, % | | — | — | — | 99 | 95 | — | — | — |

## Claims

1. A photocurable organopolysiloxane composition which comprises:

(A) 100 parts by weight of a diorganopolysiloxane having a substantially linear molecular structure represented by the general formula
$(CH_2=CH)_aR^1_{3-a}Si\text{-}O\text{-}(\text{-}SiR_2\text{-}O\text{-})_n\text{-}SiR^1_{3-a}(CH=CH_2)_a$,
in which each R is a monovalent hydrocarbon group having 1 to 12 carbon atoms, each $R^1$ is a monovalent hydrocarbon group having 1 to 6 carbon atoms and free from aliphatic unsaturation, the subscript a is 2 or 3 and n is a positive integer in the range from 20 to 2000;

(B) from 0.1 to 50 parts by weight of an organohydrogenpolysiloxane having, in a molecule, at least two hydrogen atoms directly bonded to the silicon atoms, the amount being sufficient to provide from 0.1 to 10 moles of the hydrogen atoms directly bonded to the silicon atoms per mole of the vinyl groups in the component (A);

(C) from 1 to 1000 ppm by weight as platinum of a platinum compound based on the total amount of the components (A) and (B); and

(D) from 0.1 to 10 parts by weight of a photosensitizer.

2. The photocurable organopolysiloxane composition as claimed in claim 1 wherein the diorganopolysiloxane as the component (A) is represented by the general formula
$(CH_2=CH)_3Si\text{-}O\text{-}(\text{-}SiR_2\text{-}O\text{-})_n\text{-}SiR^1_{3-a}(CH=CH_2)_a$,
wherein R, $R^1$, a and n each have the same meaning as defined in claim 1.

3. The photocurable organopolysiloxane composition as claimed in claim 1 wherein the photosensitizer as the component (D) is a compound selected from the class consisting of 4-methoxy benzophenone, 2-hydroxy-2-methyl-1-phenyl propan-1-one and benzyl.

4. The photocurable organopolysiloxane composition as claimed in claim 1 which further comprises an acetylenic compound selected from the class consisting of 3,5-dimethyl-1-hexyn-3-ol, 3-methyl-1-butyn-3-ol, 3-methyl-3-penten-1-yne, 3-methyl-1-pentyn-3-ol and 5,5-dimethyl-3-hexen-1-yne in an amount in the range from 0.1 to 10 parts by weight per 100 parts by weight of the component (A).

5. The photocurable organopolysiloxane composition as claimed in claim 1 wherein the platinum compound as the component (C) is a complex of chloroplatinic acid and a vinyl siloxane.